# EUROPEAN PATENT APPLICATION

(11) **EP 4 597 169 A2**
(43) Date of publication of application: **06.08.2025**
(21) Application number: 25150935.2
(22) Date of filing: 09.01.2025
(51) Int. Cl.: G01S 19/21, G01S 19/49

(54) **SPOOFING DETECTION USING TERRAIN AVOIDANCE AND WARNING SYSTEM**

(30) Priority: 31.01.2024 US 202463627452 P; 30.09.2024 US 202418902424
(71) Applicant: Honeywell International Inc., Charlotte, NC 28202 (US)
(72) Inventor: NICHOLLS, James Alexander, Charlotte, 28202 (US); SCHIPPER, Brian W., Charlotte, 28202 (US); RINGNES, Erik A., Charlotte, 28202 (US)
(74) Representative: Haseltine Lake Kempner LLP

(57) **Abstract**

A vehicle comprising: an user interface (UI); a global positioning system (GPS); an inertial reference system (IRS); and a terrain awareness and warning system (TAWS), the TAWS comprising processing circuitry configured to: receive at least one of: GPS data from the GPS or IRS data from the IRS; determine, based at least in part on the received at least one of the GPS data or the IRS data, whether the vehicle is receiving one or more of a GPS spoofing signal or a GPS jamming signal; and in response to a determination that the vehicle is receiving the GPS spoofing signal or the GPS jamming signal, cause the UI to output a notification indicating that the vehicle is receiving the GPS spoofing signal or the GPS jamming signal.

## Description

This application claims the benefit of U.S. Provisional Patent Application No. 63/627,452, filed January 31, 2024, and entitled "Spoofing Detection Using Terrain Avoidance and Warning System," the entire contents of which is incorporated herein by reference.

### TECHNICAL FIELD

The disclosure relates to operation of global navigation satellite systems (GNSS) receiver systems.

### BACKGROUND

Global navigation satellite systems (GNSS) are systems that may include a satellite constellation that provides positioning, navigation, and timing (PNT) services on a global or regional basis. Some examples of GNSS may include the global positioning system (GPS), Global Navigation Satellite System (GLONASS), Galileo and other similar GNSS systems. GNSS systems may be affected by intentional or unintentional interference.

### SUMMARY

In general, the disclosure describes techniques for identifying when a vehicle is receiving spoofed or jammed GNSS signals and for undertaking remedial measures when the vehicle receives spoofed or jammed signals. Remedial measures may include, but are not limited to, an alert to an operator of the vehicle or navigation of the vehicle without using GNSS signals received by the vehicle. An example Terrain Avoidance and Warning System (TAWS) of a vehicle may receive data from a GNSS system (e.g., from one or more global positioning system (GPS) monitors) and/or from an Inertial Reference System (IRS) of the vehicle and determine whether the vehicle is receiving spoofed or jammed GNSS signals based on the received data. In response to determining that the vehicle is receiving spoofed and/or jammed signals, the TAWS may cause one or more user interfaces (UI) of the vehicle to output a notification to an operator of the vehicle and/or cause a navigation system of the vehicle to navigate without using received GNSS signals. The TAWS may determine, based on the received data, when the vehicle no longer receives spoofed and/or jammed signals. The TAWS may then cause the navigation system to navigate the vehicle using received GNSS signals.

In some examples the disclosure describes techniques for identifying zones with spoofed or jammed GNSS signals and output alerts to vehicles to facilitate avoidance of the zones by the vehicles. A computing system may receive, from the TAWS of one or more vehicles, information indicating the location(s) and/or size(s) of one or more zones where the vehicles received spoofed or jammed GNSS signals. The computing system may transmit the location(s) and size(s) to other vehicles. The TAWS of the other vehicles may output or cause UIs of the other vehicles to output alerts indicating the location(s) and size(s) of the zone(s), which may facilitate the operators of the other vehicles to avoid the zone(s) and/or undergo preparatory measures in anticipation of receiving spoofed or jammed GNSS signals.

The example techniques described herein may provide several technological advantages over other techniques for identifying spoofed or jammed GNSS signals. TAWS is in communication with the GNSS and the IRS of the vehicle, which may allow the TAWS to receive data from the GNSS and the IRS to perform the techniques described herein without modification of the hardware of the vehicle. This may allow for the implementation of the techniques described herein in older vehicles with different types of GNSS and/or IRS devices. Unlike other techniques for identifying spoofed or jammed GNSS signals, which are typically implemented by the GNSS or IRS, the techniques described herein are executed by the TAWS, which may allow for the techniques to be implemented, e.g., without a need to modify aircraft wiring to mitigate the impact of GNSS spoofing.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example vehicle system for detecting whether a vehicle is receiving spoofed or jammed GNSS signals.
FIG. 2 is a block diagram illustrating an example of the vehicle system of FIG. 1.
FIG. 3 is a conceptual diagram illustrating an example interface outputted by the vehicle system of FIG. 1.
FIG. 4 is a flow chart illustrating an example operation of the vehicle system of FIG. 1.

### DETAILED DESCRIPTION

GNSS may be used to identify a position of a vehicle based on satellite signals. In some cases, bad actors may broadcast spoofed GNSS signals, which may cause a vehicle to receive a counterfeit GNSS signal (i.e., the spoofed GNSS signal) in place of an actual GNSS signal. In other cases, bad actor may output jamming signals to inhibit the vehicle's ability to receive any GNSS signals. A signal generator configured to output spoofing and/or jamming signals may affect vehicles within a set radius of the signal generator (e.g., if the signal generator is omni-directional). Any vehicles within the set radius may receive the spoofing and/or jamming signals and may be unable to accurately navigate via GNSS, which may increase a risk of mis-direction and/or collision by the vehicle.

The disclosure describes techniques for determining, via the TAWS of a vehicle, whether the vehicle is receiving spoofing and/or jamming signals based on data from the GNSS and IRS of the vehicle. The examples in this disclosure may focus on aircraft to simplify the description, however, the techniques of this disclosure are equally applicable to other types of vehicles, such as ships or other watercraft, and land based vehicles. Additionally, while the examples in this disclosure are discussed primarily with reference to a GPS, the techniques of this disclosure may be applied to any other type of GNSS.

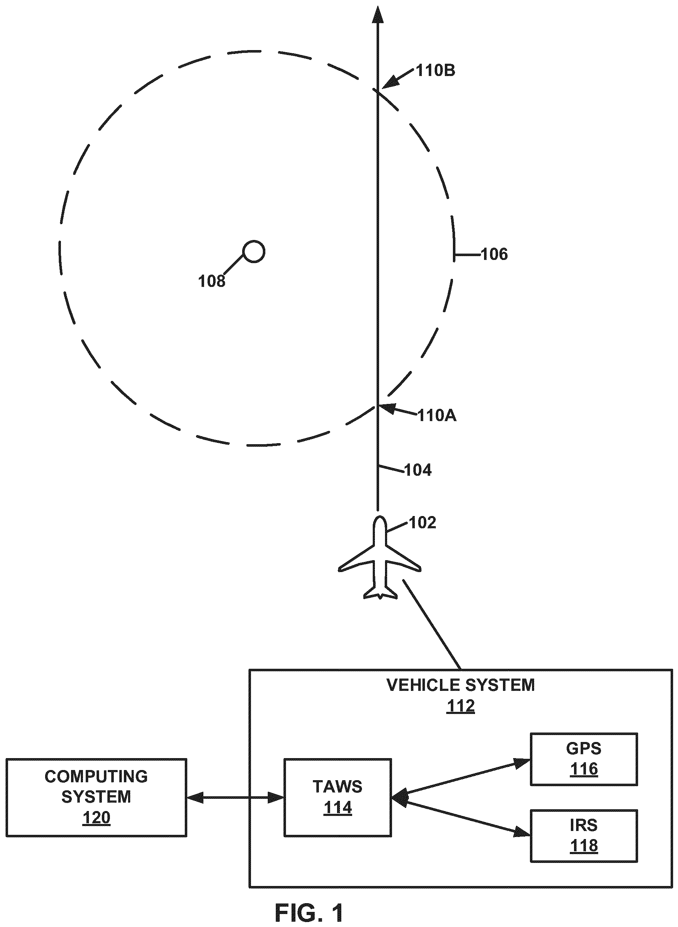

FIG. 1 is a conceptual diagram illustrating an example vehicle system 112 for detecting whether a vehicle 102 is receiving spoofed or jammed GNSS signals 106. Spoofed and/or jammed signals 106 (alternatively referred to herein as "signals 106")may be outputted by signal generator 108 and may encompass a set area around signal generator 108, depending on the range of signal generator 108. Vehicle 102 may proceed along course 104, which may intersect with an area of coverage of signal generator 108. For example, as illustrated in FIG. 1, vehicle 102 may enter the area of coverage of signal generator 108 at location 110A, at which vehicle 102 will begin to receive signals 106. Vehicle 102 may continue to receive signals 106 until vehicle 102 exits the area of coverage at location 110B. Along course 104 between locations 110A and 110B, vehicle 102 may be lead off course 104 due to signals 106, which may increase a risk of mis-direction of vehicle 102 and/or vehicle 102 experiencing a collision.

Vehicle 102 may be operated by vehicle system 112 disposed within the body of vehicle 102. Vehicle system 112 may include various components, circuitry, and/or monitors including, but are not limited to, TAWS 114, GPS 116, IRS 118, and one or more UIs. Vehicle system 112 may be in communication with a computing system 120 (e.g., a ground server).

TAWS 114 may be configured to determine an altitude and position of vehicle 102 based on data from one or more sensors (e.g., from GPS 116, from IRS 118) and transmit the altitude and position to an operator of vehicle 102. TAWS 114 may include, but is not limited to, an Enhanced Ground Proximity Warning System (EGPWS). TAWS 114 may provide alerts indicating a proximity between vehicle 102 and terrain, a closure rate of vehicle 102 to terrain, or the like.

GPS 116 may include one or more GPS monitors disposed within vehicle 102. GPS 116 may be configured to receive satellite signals and determine a relative position of vehicle 102 based on the received satellite signals. IRS 118 may include one or more sensors configured to sense an acceleration, orientation, and/or velocity of vehicle 102. IRS 118 may determine relative positions of vehicle 102 based on the sensed acceleration, orientation, and/or velocity.

In some examples, as illustrated in FIG. 1, GPS 116 may receive signals 106 and may output erroneous vehicle positions as a result. TAWS 114 may receive data from GPS 116, IRS 118, and/or one or more other sensors (e.g., a radio altimeter, an air data computer (ADC)) TAWS 114 may compare the data from GPS 116 (e.g., relative position, altitude, time) to data from IRS 118 and/or one or more other sensors to determine the accuracy of the GPS position. For example, TAWS 114 compare changes in positions and/or altitude determined by GPS 116 against changes in positions and/or altitudes determined by IRS 118 and/or other sensors to determine if the GPS-determined changes in position and/or altitude matches the changes recorded by other sensors and/or monitors. TAWS 114 may also compare the time recorded by GPS 116 against the time recorded by other sensors and/or monitors to determine whether there are discrepancies in the GPS-recorded time. If TAWS 114 identifies any discrepancies (e.g., in the changes in position, in the altitudes, in the times), TAWS 114 may determine that GPS 116 is receiving erroneous signals (e.g., signals 106). Some of the sensors to which TAWS 114 is connected including GPS 116 and IRS 118 may also implement their GNSS spoofing detection mechanisms using data unavailable to TAWS 114. In this case, those sensor may optionally provide an indication to TAWS 114 that they have detected potential spoofing activity.

If TAWS 114 determines that GPS 116 is receiving signals 106, GPS 116 may cause one or more components of vehicle system 112 to undergo remedial measures. For example, TAWS 114 may cause one or more UIs of vehicle system 112 to output a notification to the operator of vehicle 102 indicating that GPS 116 is receiving signals 106. TAWS 114 may cause one or more of a multifunction display (MFD), annunciator, or an aural alert of vehicle 102 to output the notification. The notification may include a recommendation to the operator of vehicle 102 to disengage GPS 116 (e.g., to disable updates from GPS 116 to the navigation system of vehicle 102). In some examples, TAWS 114 is configured to transmit instructions to a navigation system of vehicle 102 (e.g., flight management system (FMS) of vehicle 102) to cause the navigation system to navigate vehicle 102 without relying on signals from GPS 116 (e.g., to navigate based only on IRS 118).

TAWS 114 may continue to monitor data from GPS 116 until TAWS 114 determines that GPS 116 is no longer receiving signals 106 (e.g., that there are no discrepancies in the changes in position, time and/or altitude determined by GPS 116). In such examples, TAWS 114 may cause the UIs to output a notification to the operator, e.g., indicating that GPS 116 is no longer receiving signals 106, indicating that the operator may re-engage GPS 116. In some examples, TAWS 114 is configured to transmit instructions to the navigation system to cause the navigation system to navigate vehicle 102 based at least in part on data from GPS 116.

TAWS 114 may transmit data corresponding to zones with signals 106 to computing system 120, (e.g., via communications circuitry of vehicle 102). The communications circuitry of vehicle 102 may include, but is not limited to, a communication management unit (CMU) of vehicle 102. For example, TAWS 114 is configured to transmit a time, position, and/or altitude of vehicle 102 when GPS 116 began receiving signals 106 and/or when GPS 116 stopped receiving signals 106. Computing system 120 may determine, based on the information from TAWS 114, a center, range, and/or size of each zone identified by TAWS 114 as including signals 106. Computing system 120 may aggregate data from TAWS 114 from multiple vehicles to identify zones with potential signals 106 within a region and may update the zones based on updated information from other vehicles. For example, computing system 120 is configured to remove zones, adjust sizes and/or locations of zones, and/or add new zones based on updated information from other vehicles. The information on the zones may be stored by computing system 120 (e.g., to identify recurring zones, to facilitate update of the zones, or the like).

Computing system 120 may transmit information indicating the presence and/or characteristics of zones to TAWS 114 (e.g., via the communications circuitry of vehicle 102). TAWS 114 may output the received information to the operator of vehicle 102 via UI(s). Based on the information, the operator of vehicle 102 may avoid zones with signals 106 and/or may undertake proactive measures to address the zones (e.g., by avoiding course changes within zones, by preemptively disengaging GPS 116). TAWS 114 may display the information in a same display or different display as other information (e.g., weather information, terrain information) displayed by TAWS 114.

As described herein, TAWS 114 of vehicle 102 may include TAWS on an existing vehicle. The techniques described herein may be performed by TAWS 114 on an existing vehicle without any or minimal modifications to vehicle 102. For example, TAWS 114 may receive and execute instructions to perform the techniques described herein with existing components and/or through existing wiring within vehicle 102. IN such examples, TAWS 114 of an older vehicle 102 may be used to alert operators of the presence of GPS jamming or spoofing signals (e.g., signals 106) without requiring any physical modification of the components of TAWS 114 or of vehicle 102. Thus, the techniques described herein simplify the process for updating older vehicles with means for identifying GPS jamming or spoofing signals without requiring significant physical modifications to the older vehicles, which may be complex and/or may affect other systems within the vehicle.

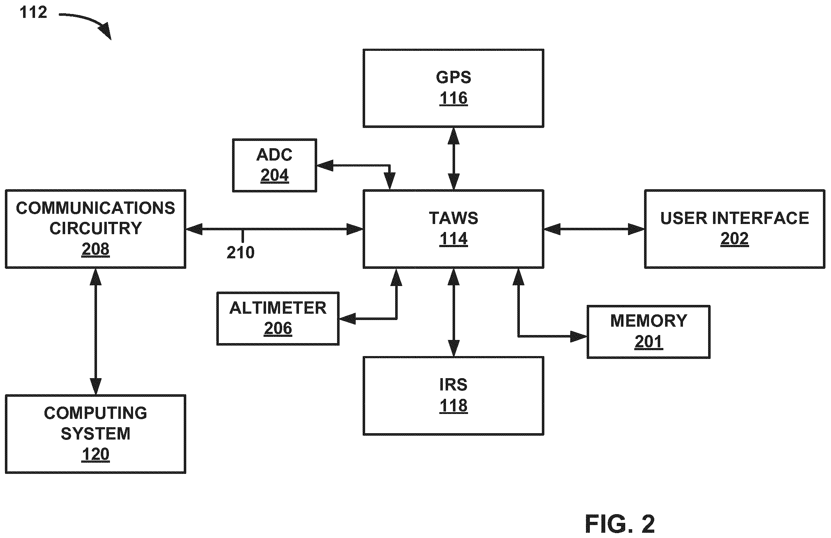

FIG. 2 is a block diagram illustrating an example of vehicle system 112 of FIG. 1. The arrangement of FIG. 2 is just one possible example arrangement of vehicle system 112. Each of the components of vehicle system 112 may include processing circuitry. The components illustrated in FIG. 2 may be executed by a single instance of processing circuitry and/or by separate processing circuitry.

Examples of processing circuitry may include any one or more of a microcontroller (MCU), e.g. a computer on a single integrated circuit containing a processor core, memory, and programmable input/output peripherals, a microprocessor (µP), e.g. a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor" or "controller," as used herein, may refer to any one or more of the foregoing structures or any other structure operable to perform techniques described herein.

In some examples, instructions for TAWS 114 may be stored in one or more memory units of vehicle system 112, represented by memory 201. Examples of memory 201 may include any type of computer-readable storage media. Some examples may include random access memory (RAM), read only memory (ROM), programmable read only memory (PROM), erasable programmable read only memory (EPROM), one-time programable (OTP) memory, electronically erasable programmable read only memory (EEPROM), flash memory, or another type of volatile or non-volatile memory device. In some examples, the computer readable storage media may also store data, such as configuration information, temporary values and other types of data used to perform the functions of this disclosure.

TAWS 114 may be coupled to and receive data from ADC 204, altimeter 206, GPS 116, IRS 118. TAWS 114 may receive instructions from the operator via UI 202 and may transmit information (e.g., notifications indicating that GPS 116 is receiving signals 106) to the operator via UI 202. For example, TAWS 114 may cause UI 202 to output weather information, terrain information, and/or zones with signals 106 based on the received data. TAWS 114 may output the information via an MFD of UI 202. TAWS 114 may output the zones with signals 106 separate from and/or in conjunction with the weather information and/or terrain information. The operator may toggle between weather information, terrain information, and/or the zones with signals 106 in the MFD. TAWS 114 may receive and execute instructions from memory 201 to perform the techniques described herein.

ADC 204 may determine an airspeed and/or an altitude of vehicle 102, e.g., based on pressure inputs, accelerometers, gyroscopes, and/or the like. ADC 204 may output the determined airspeed and/or altitude to TAWS 114. Altimeter 206 may be used to determine an altitude of vehicle 102 and/or a distance between vehicle 102 and terrain. Altimeter 206 may include, but is not limited to, a radio altimeter. Altimeter 206 may output the determined altitude to TAWS 114.

TAWS 114 may compare data from GPS 116 against data from ADC 204, altimeter 206, and/or IRS 118 to determine whether GPS 116 is receiving signals 106. For example, TAWS 114 compares the positions and/or changes in positions from GPS 116 against the positions and/or changes in positions from IRS 118 and checks for any inconsistencies between the two sets of positions and/or changes in positions (e.g., any changes in positions from GPS 116 that do not have a corresponding change in position from IRS 118). TAWS 114 may compare a time received by GPS 116 against times from other sensors (e.g., from ADC 204) to determine whether any inconsistencies in the time satisfies a threshold value. TAWS 114 may compare an altitude from GPS 116 against the altitude determined by ADC 204, altimeter 206, and/or IRS 118 to check for any inconsistencies in the altitude from GPS 116. TAWS 114 may determine that GPS 116 is receiving signals 106 based on identification of inconsistencies, e.g., in the changes in positions, in the time, and/or in the altitude.

UI 202 may include one or more interfaces configured to receive commands from the operator of vehicle 102 and/or output information to the operator. UI 202 may receive and output information in the form of visual and/or audio signals. UI 202 may include one or more interfaces including, but are not limited to, an MFD, an aural alert, and/or an annunciator. UI 202 may output notifications to the operator indicating whether vehicle 102 is receiving signals 106. An aural message outputted by UI 202 in response to TAWS 114 determining that vehicle 102 is receiving signals 106 may be "CAUTION SPOOFING POSSIBLE," "CAUTION JAMMING POSSIBLE," "CAUTION POSSIBLE GNSS ERROR," or the like. An aural message outputted by UI 202 in response to TAWS 114 determining that vehicle 102 is no longer receiving signals 106 may be "SPOOFING TERMINATED," "JAMMING TERMINATED," or the like. The aural message may be accompanied by a visual alert through the annunciator or the MFD. For example, UI 202 may provide a visual "SPOOF" or "JAMMING" alert contemporaneously with the aural message. UI 202 may output each notification for at least a threshold period of time (e.g., at least ten seconds) to increase a likelihood that the operator registers the notification.

Communications circuitry 208 may include one or more components configured to transmit information between TAWS 114 and computing system 120 external to vehicle 102. TAWS 114 and communications circuitry 208 may be connected by cable 210. Communications circuitry 208 may include, but is not limited to, a CMU of vehicle 102. TAWS 114 may transmit to computing system 120, via communications circuitry 208, information indicative of signals 106 received by vehicle 102 (e.g., a time and position of vehicle 102 when vehicle 102 receives and/or no longer receives signals 106, a type of signals 106, a strength of signals 106). Communications circuitry 208 may include or may be coupled to one or more of a SATCOM radio or a VHF radio.

Computing system 120 may be configured to receive information from and transmit information to a plurality of vehicles (e.g., including vehicle 102). Computing system 120 may be a ground server. Computing system 120 may be disposed within a single computing device, in multiple computing devices, and/or in a cloud computing environment. Computing system 120 may communicate with vehicles (e.g., with communications circuitry 208 of vehicle 102) via one or more wireless communications protocols, such as, but is not limited to, SATCOM or VHF data radio (VDR) protocols. In some examples, computing system 120 transmits information to vehicles and receives information from vehicles as ACARS messages.

Computing system 120 may determine the locations of signal generators 108 and/or zones with signals 106 based on information from vehicles (e.g., from vehicle 102). Computing system 120 may determine, based on the times and locations when vehicles enter and exit zones with signals 106, the positions of the centroids of the zones and/or the ranges of the zones (e.g., the area covered by each zone, a radius of each zone). Computing system 120 may store the determined positions and ranges of the zones in memory of computing system 120.

Computing system 120 may maintain a list of active signal generators 108 and inactive signal generators 108. For each active signal generators 108, computing system 120 may define the zone corresponding to the signal generator 108 in terms of the position of the centroid of the zone and the range of the zone. Computing system 120 may continuously monitor and adjust the positions and/or ranges of the zones in response to additional information from vehicles (e.g., as more vehicles pass through or around the zones). For example, computing system 120 removes zones that no longer contain signals 106 and/or adds new zones where vehicles have received signals 106 based on additional information from vehicles over time. In some examples, a signal generator 108 is periodically de-activated and then re-activated. In such examples, computing system 120 may retrieve the stored position and/or range for the respective signal generator 108 and use the retrieved position and/or range to define the respective signal generator 108 within the list of active zones.

Computing system 120 may output the list of active signal generators 108 and corresponding positional information to a vehicle upon request by the vehicle (e.g., upon request by TAWS 114 of vehicle 102). In some examples, computing system 120 automatically outputs the list of active signal generators 108 and corresponding position information to vehicles. Computing system 120 may only output active signal generators 108 and the positional information of the corresponding zones if vehicle 102 is within a threshold distance of signal generator 108 (e.g., if vehicle 102 is within a threshold distance of a centroid of a zone). The threshold distance may be up to 500 miles.

TAWS 114 of vehicle 102 may determine, based on the received information, the locations and positions of zones with signals 106 relative to vehicle 102. TAWS 114 may output the information via UI 202, e.g., on an interface generated by TAWS 114, to alert the operator of the positions of the zones relative to vehicle 102.

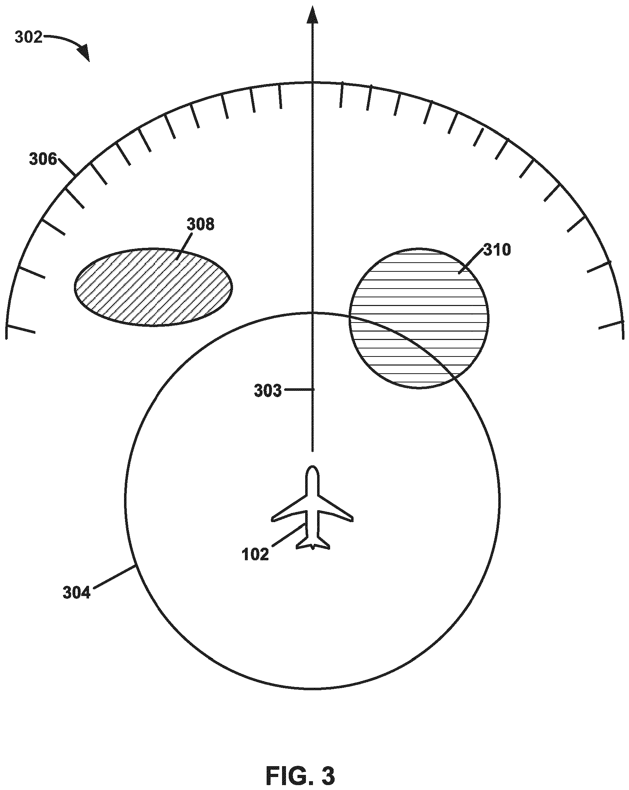

FIG. 3 is a conceptual diagram illustrating an example interface 302 outputted by the vehicle system 112 of FIG. 1. While FIG. 3 is primarily described with reference to an interface 302 typically generated by TAWS 114, the information described herein may be presented on any interface used to communicate the relative positions of vehicle 102 and one or more areas in space to an operator of vehicle 102.

Display 302 may be outputted by TAWS 114 and via UI 202 (e.g., via MFD) to provide the relative positions and orientations of obstacles, objects, and/or areas of interest relative to vehicle 102. Display 302 may provide an icon of vehicle 102 and a current orientation 303 of vehicle 102 (e.g., a heading of vehicle 102). Display 302 may provide a distance reference 304 and an orientation reference 306. The operator may use distance reference 304 and orientation reference 306 to determine the relative distances and/or orientations of obstacles, objects, and/or areas of interest from vehicle 102. For example, distance reference 304 defines a 50 mile radius around vehicle 102.

Display 302 may indicate various obstacles, objects, and/or areas of interest relative to vehicle 102, which may include, but are not limited to, terrain features, weather features 308, and/or zones 310 with signals 106. Each type of feature may be displayed with unique markings, symbols, colors, and/or icons to allow the operator to visual identify and distinguish each feature. In some examples, as illustrated in FIG. 3, display 302 may simultaneously output zones 310 alongside weather features 308 and/or other features typically outputted by an example TAWS. In some examples, display 302 may be configured to solely output zones 310. In such examples, the operator may cycle between multiple displays outputted by TAWS 114 to determine the positions of different features relative to vehicle 102.

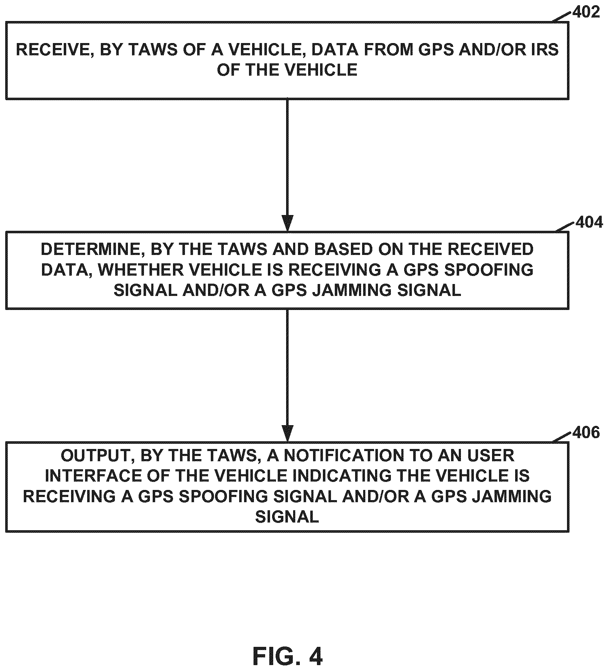

FIG. 4 is a flow chart illustrating an example operation of the vehicle system 112 of FIG. 1. While the example operation is primarily described with reference to TAWS 114 of example vehicle system 112 illustrated in FIGS. 1 and 2, the example operation may be performed by any vehicle systems and/or TAWS described herein. Additionally, while FIG. 4 is primarily described with reference to GPS, the example operation may be performed for any other GNSS.

Vehicle system 112 may receive, by TAWS 114 of vehicle 102, data from GPS 116 and/or IRS 118 of vehicle 102 (402). The data from GPS 116 may include changes in position and/or altitude of vehicle 102 and corresponding times (e.g., corresponding timestamps) as determined by one or more GPS 116 monitors based on received satellite signals. The data from IRS 118 of vehicle 102 may include changes in position and/or altitude of vehicle 102 and corresponding times (e.g., corresponding timestamps) as determined by one or more IRS 118 monitors (e.g., based on information from one or more accelerometers, barometers, gyroscopes, and/or inertial measurement units (IMU)). In some examples, TAWS 114 receives information indication a position and/or altitude of vehicle 102 from ADC 204 and/or altimeter 206 coupled to TAWS 114.

Vehicle system 112 may determine, by TAWS 114 and based on the received data, whether vehicle 102 is receiving a GPS spoofing or jamming signals 106 (404). TAWS 114 may compare changes in position determined by GPS 116 against changes in positions determined by IRS 118 and/or recorded by ADC 204 to determine whether each change in position from GPS 116 corresponds to a change in position from IRS 118 and/or ADC 204. TAWS 114 may compare a time received by GPS 116 against a time recorded by TAWS 114 and/or by ADC 204 to determine whether a time difference between the two times is greater than or equal to a threshold difference (e.g., whether the time difference at one or more times is greater than or equal to an expected local clock error). TAWS 114 may compare the altitude determined by GPS 116 based on received signals against the altitude determined by TAWS 114 (e.g., via altimeter 206, via signals from IRS 118) to determine whether the altitudes are the same and/or within a threshold distance. TAWS 114 may determine that vehicle is receiving signals 106 based on a determination that: (1) at least one change in position determined by GPS 116 does not have a corresponding change in position from IRS 118 and/or ADC 204; (2) the time difference is greater than or equal to the threshold difference at one or more instances; and/or (3) the difference in altitude is greater than a threshold difference at one or more instances.

Vehicle system 112 may output, by TAWS 114, a notification to UI 202 of vehicle 102 indicating vehicle 102 is receiving a GPS spoofing signal and/or GPS jamming signal (406). TAWS 114 may cause UI 202 to output one or more visual and/or audio notifications to the operator indicating vehicle 102 is receiving signals 106. TAWS 114 may output the notification via an aural warning system, an annunciator, and/or a MFD ofUI 202. In some examples, TAWS 114 retrieves, from computing system 120, the positions and ranges of zones 310 with signals 106 in the vicinity of vehicle 102 (e.g., up to 500 miles from vehicle 102). TAWS 114 may output zones 310 to the operator via UI 202 alongside or separate from other features TAWS 114 provides to the operator (e.g., locations of terrain features, of weather features 308). In some examples, TAWS 114 may transmit instructions to a navigation system (e.g., FMS of vehicle 102) to navigate vehicle 102 without using signals from GPS 116. In some examples, the notification outputted by UI 202 may recommend the operator to disengage GPS 116 and to navigate using another system of vehicle system 112 (e.g., via IRS 118).

TAWS 114 may continuously or periodically monitor GPS 116, e.g., to determine whether GPS 116 is receiving signals 106. In some examples, TAWS 114 determines that GPS 116 is no longer receiving signals 106. In such examples, TAWS 114 may cause UI 202 to terminate outputting the notification to the operator and/or to output a second notification indicating that GPS 116 is no longer receiving signals 106. In some examples, in response to determining that GPS 116 is no longer receiving signals 106, TAWS 114 may transmit instructions to the navigation system to cause the navigation system to navigate vehicle 102 via information from GPS 116.

The techniques of this disclosure may also be described in the following examples.

Example 1: a vehicle comprising: an user interface (UI); a global positioning system (GPS); an inertial reference system (IRS); and a terrain awareness and warning system (TAWS), the TAWS comprising processing circuitry configured to: receive at least one of: GPS data from the GPS or IRS data from the IRS; determine, based at least in part on the received at least one of the GPS data or the IRS data, whether the vehicle is receiving one or more of a GPS spoofing signal or a GPS jamming signal; and in response to a determination that the vehicle is receiving the GPS spoofing signal or the GPS jamming signal, cause the UI to output a notification indicating that the vehicle is receiving the GPS spoofing signal or the GPS jamming signal.

Example 2: the vehicle of example 1, further comprising a navigation system configured to receive the GPS data from the GPS and navigate the vehicle based at least in part on the received GPS data, and wherein the processing circuitry of the TAWS is further configured to: in response to a determination that the vehicle is receiving the GPS spoofing signal or the GPS jamming signal, cause the navigation system to cease receiving the GPS data from the GPS and to navigate the vehicle without use of the received GPS data.

Example 3: the vehicle of example 2, wherein the processing circuitry of the TAWS is further configured to: determine, based at least in part on the received at least one of the GPS data or the IRS data, that the vehicle is no longer receiving the GPS spoofing signal or the GPS jamming signal; and in response to a determination that the vehicle is no longer receiving the GPS spoofing signal or the GPS jamming signal, cause the navigation system to begin receiving the GPS data from the GPS and to navigate the vehicle based at least in part on the received GPS data.

Example 4: the vehicle of any of examples 2 or 3, wherein the navigation system comprises a flight management system (FMS).

Example 5: the vehicle of any of examples 1-4, wherein the notification comprises a first notification, and wherein the processing circuitry of the TAWS is further configured to: determine, based at least in part on the received at least one of the GPS data or the IRS data, that the vehicle is no longer receiving the GPS spoofing signal or the GPS jamming signal; and in response to a determination that the vehicle is no longer receiving the GPS spoofing signal or the GPS jamming signal, cause the UI to output a second notification indicating that the vehicle is no longer receiving the GPS spoofing signal or the GPS jamming signal.

Example 6: the vehicle of example 5, wherein the first notification comprises an indication to an operator of the vehicle to disable updates from the GPS to a navigation system of the vehicle.

Example 7: the vehicle of any of examples 5 or 6, wherein the second notification comprises an indication to an operator of the vehicle to enable updates from the GPS to a navigation system of the vehicle.

Example 8: the vehicle of any of examples 1-7, wherein to determine whether the vehicle is receiving one or more of the GPS spoofing signal or the GPS jamming signal, the processing circuitry of the TAWS is configured to: receive the GPS data from the GPS, wherein the GPS data comprises GPS positions, GPS altitude, and GPS time; receive the IRS data from the IRS, wherein the IRS data comprises an IRS positions and IRS time; compare the GPS positions to the IRS positions to determine whether there are changes in the GPS positions without a corresponding change in the IRS position; determine whether a difference between the GPS time and the IRS time is greater than or equal to a first threshold value; compute an altitude of the vehicle; determine whether a difference between the GPS altitude and the computed altitude is greater than or equal to a second threshold value; and based on a determination of one or more of: 1) a presence of changes in the GPS positions without corresponding changes in the IRS position, 2) that the difference between the GPS time and the IRS time is greater than or equal to the first threshold value, or 3) that the difference between the GPS altitude and the computed altitude is greater than or equal to the second threshold value, determine that the vehicle is receiving the GPS spoofing signal or the GPS jamming signal.

Example 9: the vehicle of any of examples 1-8, wherein the UI comprises one or more of a display or an aural warning system in a cabin of the vehicle.

Example 10: the vehicle of any of examples 1-9, further comprising communications circuitry coupled to the TAWS, and wherein the processing circuitry of the TAWS is configured to: receive, via the communications circuitry and from a computing system, positions and sizes of one or more zones with GPS jamming signals or GPS spoofing signals; determine, for each zone of the one or more zones and based on the position and size of the respective zone, a distance and orientation of the zone relative to the vehicle; and cause the UI to output the distance and orientation of each zone of the one or more zones relative to the vehicle.

Example 11: the vehicle of example 10, wherein the communications circuitry comprises a communications management unit (CMU).

Example 12: a system comprising: communications circuitry; and processing circuitry configured to: receive, via communications circuitry and from a terrain awareness and warning system (TAWS) of a first vehicle, a first indication that the first vehicle has entered a zone with a GPS jamming signal or a GPS spoofing signal, the first indication comprising a first time and first position of the first vehicle when a communications management unit (CMU) of the first vehicle outputted the first indication; receive, via the communications circuitry and from the TAWS of the first vehicle, a second indication that the first vehicle has exited the zone, the second indication comprising a second time and second position of the first vehicle when the CMU outputted the second indication; determine, based at least in part on the first time, first position, second time, and second position, a position and a size of the zone; transmit, via the communications circuitry, a notification indicating the position and the size of the zone to the TAWS of a second vehicle.

Example 13: the system of example 12, wherein the notification comprises a first notification, and wherein the processing circuitry is configured to: receiving, via the communications circuitry and from the TAWS of a third vehicle, a third indication that the third vehicle has traveled through the zone and did not detect the GPS jamming signal or the GPS spoofing signal; and based on the third indication, transmit, via the communications circuitry, a second notification indicating the absence of the GPS jamming signal or the GPS spoofing signal in the zone to the TAWS of the second vehicle.

Example 14: the system of any of examples 12 or 13, wherein the communications circuitry is configured to receive and transmit Aircraft Communication Address and Reporting System (ACARS) messages to the TAWS of the first vehicle and the second vehicle, and wherein the first indication, the second indication, and the notification comprise ACARS messages.

Example 15: the system of any of examples 12-14, further comprising a memory, and wherein the processing circuitry is configured to: store the position and size of the zone inside the memory.

Example 16: the system of any of examples 12-15, wherein the communications circuitry comprises one or more of a SATCOM radio or a VHS radio.

Example 17: a method comprising: receiving, by a terrain awareness and warning system (TAWS) of a vehicle, data from one or more of a global positioning system (GPS) or an initial reference system (IRS); determining, by the TAWS and based at least in part on the received data, whether the vehicle is receiving one or more of a GPS spoofing signal or a GPS jamming signal; and in response to determining that the vehicle is receiving the one or more of the GPS spoofing signal or the GPS jamming signal, causing, by the TAWS, an user interface (UI) of the vehicle to output a notification indicating that the vehicle is receiving the one or more of the GPS spoofing signal or the GPS jamming signal.

Example 18: the method of example 17, further comprising: in response to determining that the vehicle is receiving the one or more of the GPS spoofing signal or the GPS jamming signal, causing, by the TAWS, a navigation system of the vehicle to cease receiving GPS data from the GPS and to navigate the vehicle without use of the GPS data.

Example 19: the method of example 18, further comprising: determining, by the TAWS and based at least in part on the received data, that the vehicle is no longer receiving the one or more of the GPS spoofing signal or the GPS jamming signal; and in response to determining that the vehicle is no longer receiving the one or more of the GPS spoofing signal or the GPS jamming signal, causing, by the TAWS, the navigation system to begin receiving GPS data from the GPS and to navigate the vehicle based at least in part on the received GPS data.

Example 20: the method of any of examples 18 or 19, wherein the navigation system comprises a flight management system (FMS).

Example 21: the method of any of examples 17-20, wherein the notification comprises a first notification, and wherein the method further comprises: determining, by the TAWS and based at least in part on the received data, that the vehicle is no longer receiving the one or more of the GPS spoofing signal or the GPS jamming signal; and in response to determining that the vehicle is no longer receiving the one or more of the GPS spoofing signal or the GPS jamming signal, causing, by the TAWS, the UI to output a second notification indicating that the vehicle is no longer receiving the one or more of the GPS spoofing signal or the GPS jamming signal.

Example 22: the method of example 21, wherein the first notification comprises an indication to an operator of the vehicle to disable updates from the GPS to a navigation system of the vehicle.

Example 23: the method of any of examples 21 or 22, wherein the second notification comprises an indication to an operator of the vehicle to enable updates from the GPS to a navigation system of the vehicle.

Example 24: the method of any of examples 17-23, further comprising: receiving, by the TAWS and via communications circuitry of the vehicle, positions and sizes of one or more zones with one or more of GPS spoofing signal or GPS jamming signal from a computing system; determining, by the TAWS and for each zone of the one or more zones, a distance and orientation of the zone relative to the vehicle based on the position and size of the respective zone; and causing, by the TAWS, the UI to output the distance and orientation of each zone of the one or more zones relative to the vehicle.

Example 25: the method of example 24, wherein the distance and orientation of each zone is overlayed on top of terrain and weather information outputted by the TAWS.

Example 26: a computer-readable medium comprising instructions that, when executed by processing circuitry of a terrain awareness and warning system (TAWS) of a vehicle, causes the processing circuitry to perform the method of any of examples 17-25.

In one or more examples, the functions described above may be implemented in hardware, software, firmware, or any combination thereof. For example, the various components of FIGS. 1 or 2, such as TAWS 114, GPS 116, or IRS 118, may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein, may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of Ics (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. These and other examples are within the scope of the following claims.

## Claims

1. A vehicle comprising:
an user interface (UI);
a global positioning system (GPS);
an inertial reference system (IRS); and
a terrain awareness and warning system (TAWS), the TAWS comprising processing circuitry configured to:
receive at least one of: GPS data from the GPS or IRS data from the IRS;
determine, based at least in part on the received at least one of the GPS data or the IRS data, whether the vehicle is receiving one or more of a GPS spoofing signal or a GPS jamming signal; and
in response to a determination that the vehicle is receiving the GPS spoofing signal or the GPS jamming signal, cause the UI to output a notification indicating that the vehicle is receiving the GPS spoofing signal or the GPS jamming signal.

2. The vehicle of claim 1, further comprising a navigation system configured to receive the GPS data from the GPS and navigate the vehicle based at least in part on the received GPS data, and wherein the processing circuitry is further configured to:
in response to a determination that the vehicle is receiving the GPS spoofing signal or the GPS jamming signal, cause the navigation system to cease receiving the GPS data from the GPS and to navigate the vehicle without use of the received GPS data.

3. The vehicle of claim 2, wherein the processing circuitry of the TAWS is further configured to:
determine, based at least in part on the received at least one of the GPS data or the IRS data, that the vehicle is no longer receiving the GPS spoofing signal or the GPS jamming signal; and
in response to a determination that the vehicle is no longer receiving the GPS spoofing signal or the GPS jamming signal, cause the navigation system to being receiving the GPS data from the GPS and to navigate the vehicle based at least in part on the received GPS data.

4. The vehicle of any of claims 1-3,
wherein TAWS comprises an existing TAWS on the vehicle, and
wherein the processing circuitry of the TAWS is configured to receive and execute instructions to determine whether the vehicle is receiving the one or more of the GPS spoofing signal or the GPS jamming signal and cause the UI to output a notification indicating that the vehicle is receiving the GPS spoofing signal or the GPS jamming signal without requiring any modification of the TAWS.

5. The vehicle of any of claims 1-4, wherein the notification comprises a first notification, and wherein the processing circuitry of the TAWS is further configured to:
determine, based at least in part on the received at least one of the GPS data or the IRS data, that the vehicle is no longer receiving the GPS spoofing signal or the GPS jamming signal; and
in response to a determination that the vehicle is no longer receiving the GPS spoofing signal or the GPS jamming signal, cause the UI to output a second notification indicating that the vehicle is no longer receiving the GPS spoofing signal or the GPS jamming signal.

6. The vehicle of claim 5, wherein the first notification comprises an indication to an operator of the vehicle to disable updates from the GPS to a navigation system of the vehicle.

7. The vehicle of any of claims 5 and 6, wherein the second notification comprises an indication to an operator of the vehicle to enable updates from the GPS to a navigation system of the vehicle.

8. The vehicle of any of claims 1-7, wherein to determine whether the vehicle is receiving one or more of the GPS spoofing signal or the GPS jamming signal, the processing circuitry of the TAWS is configured to:
receive the GPS data from the GPS, wherein the GPS data comprises GPS positions;
receive the IRS data from the IRS, wherein the IRS data comprises IRS positions;
compare the GPS positions to the IRS positions to determine whether there are changes in the GPS positions without a corresponding changes in the IRS position; and
based on a determination of a presence of changes in the GPS positions without corresponding changes in the IRS positions, determine that the vehicle is receiving one or more of the GPS spoofing signal or the GPS jamming signal.

9. The vehicle of any of claims 1-8, wherein to determine whether the vehicle is receiving one or more of the GPS spoofing signal or the GPS jamming signal, the processing circuitry of the TAWS is configured to:
receive the GPS data from the GPS, wherein the GPS data comprises a GPS time;
receive the IRS data from the IRS, wherein the IRS data comprises an IRS time;
determine whether a difference between the GPS time and the IRS time is greater than or equal to a threshold value; and
based on a determination that the difference between the GPS time and the IRS time is greater than or equal to the threshold value, determine that the vehicle is receiving one or more of the GPS spoofing signal or the GPS jamming signal.

10. The vehicle of any of claims 1-9, wherein to determine whether the vehicle is receiving one or more of the GPS spoofing signal or the GPS jamming signal, the processing circuitry of the TAWS is configured to:
receive the GPS data from the GPS, wherein the GPS data comprises a GPS altitude;
receive the IRS data from the IRS;
compute, based at least in part on the received IRS data, an altitude of the vehicle;
determine, a difference between the GPS altitude and the computed altitude; and
based on a determination that the difference between the GPS altitude and the computer altitude is greater than or equal to a threshold value, determine that the vehicle is receiving one or more of the GPS spoofing signal or the GPS jamming signal.

11. The vehicle of any of claims 1-10, wherein the UI comprises one or more of a display or an aural warning system in a cabin of the vehicle.

12. The vehicle of any of claims 1-11, further comprising communications circuitry coupled to the TAWS, and wherein the processing circuitry of the TAWS is configured to:
receive, via the communications circuitry and from a computing system, positions and sizes of one or more zones with one or more of the GPS jamming signal or the GPS spoofing signal;
determine, for each zone of the one or more zones and based on the position and size of the respective zone, a distance and orientation of the zone relative to the vehicle; and
cause the UI to output the distance and orientation of each zone of the one or more zones relative to the vehicle.

13. A system comprising:
communications circuitry; and
processing circuitry configured to:
receive, via the communications circuitry and from a terrain awareness and warning system (TAWS) of a first vehicle, a first indication that the first vehicle has entered a zone with a GPS jamming signal or a GPS spoofing signal, the first indication comprising a first time and first position of the first vehicle when a communications management unit (CMU) outputted the first indication;
receive, via the communications circuitry and from the TAWS of the first vehicle, a second indication that the first vehicle has exited the zone, the second indication comprising a second time and a second position of the first vehicle when the CMU outputted the second indication;
determine, based at least in part on the first time, first position, second time, and second position, a position and a size of the zone; and
transmit, via the communications circuitry, a notification indicating the position and the size of the zone to the TAWS of a second vehicle.

14. The system of claim 13, wherein the notification comprises a first notification, and wherein the processing circuitry is configured to:
receive, via the communications circuitry and from TAWS of a third vehicle, a third indication that the third vehicle has traveled through the zone and did not detect the GPS jamming signal or the GPS spoofing signal; and
based on the third indication, transmit, via the communications circuitry, a second notification indicating the absence of the GPS jamming signal or the GPS spoofing signal in the zone to the TAWS of the second vehicle.

15. The system of any of claims 13 and 14, wherein the communications circuitry is configured to receive and transmit Aircraft Communication Address and Reporting System (ACARS) messages to the TAWS of the first vehicle and to the TAWS of the second vehicle, and wherein the first indication, the second indication, and the notification comprises ACARS messages.
